# EUROPÄISCHE PATENTSCHRIFT

(11) **EP 3 322 614 B1**
(45) Veröffentlichungstag und Bekanntmachung des Hinweises auf die Patenterteilung: **04.05.2022**
(21) Anmeldenummer: 16742214.6
(22) Anmeldetag: 14.07.2016
(51) Int. Cl.: B60N 2/58, A47C 31/02, B68G 7/00, B68G 7/12, B25B 31/00

(54) **CLIP ZUR BEFESTIGUNG EINES SITZBEZUGES AN EINEM SCHAUMTEIL EINES SITZPOLSTERS SOWIE SCHAUMWERKZEUG, HERSTELLUNGSANORDNUNG UND VERFAHREN ZUR HERSTELLUNG EINES SCHAUMTEILS EINES SITZPOLSTERS**
CLIP FOR SECURING A SEAT COVER TO A FOAM PART OF A SEAT CUSHION, FOAMING TOOL, PRODUCTION ARRANGEMENT, AND METHOD FOR PRODUCING A FOAM PART OF A SEAT CUSHION
CLIP POUR FIXER UN REVÊTEMENT DE SIÈGE SUR UN ÉLÉMENT DE MOUSSE D'UNE GARNITURE DE SIÈGE, AINSI QUE MOULE DE MOUSSAGE, ENSEMBLE ET PROCÉDÉ DE FABRICATION D'UN ÉLÉMENT DE MOUSSE D'UNE GARNITURE DE SIÈGE.

(30) Priorität: 14.07.2015 DE 102015213166; 08.09.2015 DE 102015217133; 21.01.2016 DE 102016200841
(43) Veröffentlichungstag der Anmeldung: 23.05.2018
(73) Patentinhaber: Adient Luxembourg Holding S.à r.l., 1855 Luxembourg (LU)
(72) Erfinder: NAVARRO, Daniel, 67500 Haguenau (FR); BRAUN, Robert, 67150 Daubensand (FR); MEHL, Nicolas, 67400 Illkirch (FR); KECHID, Salah, 67400 Illkirch (FR)
(74) Vertreter: Liedtke & Partner Patentanwälte
(86) Internationale Anmeldenummer: PCT/EP2016/066793
(87) Internationale Veröffentlichungsnummer: WO 2017/009425

(56) Entgegenhaltungen:
- EP-A1- 2 075 093
- EP-A1- 2 777 438
- WO-A1-2010/096933
- DE-A1-102014 011 341

## Beschreibung

Die Erfindung betrifft einen Clip zur Befestigung eines Sitzbezuges an einem Schaumteil eines Sitzpolsters. Die Erfindung betrifft außerdem ein Schaumwerkzeug, eine Herstellungsanordnung und ein Verfahren zur Herstellung eines Schaumteils eines Sitzpolsters.

Aus dem Stand der Technik sind Clips zur Befestigung eines Sitzbezuges an einem Schaumteil eines Sitzpolsters allgemein bekannt. Diese Clips werden bei der Herstellung des Schaumteils des Sitzpolsters in das Schaumteil eingeschäumt. Der Sitzbezug ist dann an diesen Clips befestigbar.

In der EP 2 075 093 A1 wird ein Automatik-Clipmontagewerkzeug zum automatischen Montieren eines Clips an einem axialen Abschnitt eines in einer gepolsterten Füllung für einen Sitz eingebetteten Spanndrahtes beschrieben. Der Clip ist angepasst, um zwischen einem Spanngurt einer die gepolsterte Füllung abdeckenden Sitzverkleidung und dem axialen Abschnitt des Spanndrahtes festgehalten zu werden. Der Clip beinhaltet einen Hakenabschnitt, um an dem axialen Abschnitt des Spanndrahtes eingehakt und festgehalten zu werden.

Aufgabe der vorliegenden Erfindung ist es, einen verbesserten Clip zur Befestigung eines Sitzbezuges an einem Schaumteil eines Sitzpolsters anzugeben. Aufgabe der Erfindung ist es außerdem, ein verbessertes Schaumwerkzeug, eine verbesserte Herstellungsanordnung und ein verbessertes Verfahren zur Herstellung eines Schaumteils eines Sitzpolsters anzugeben.

Die Aufgabe wird erfindungsgemäß gelöst durch einen Clip zur Befestigung eines Sitzbezuges an einem Schaumteil eines Sitzpolsters mit den Merkmalen des Anspruchs 1, durch ein Schaumwerkzeug zur Herstellung eines Schaumteils eines Sitzpolsters mit den Merkmalen des Anspruchs 2, durch eine Herstellungsanordnung zur Herstellung eines Schaumteils eines Sitzpolsters mit den Merkmalen des Anspruchs 4 und durch ein Verfahren zur Herstellung eines Schaumteils eines Sitzpolsters mit den Merkmalen des Anspruchs 10.

Vorteilhafte Ausgestaltungen der Erfindung sind Gegenstand der Unteransprüche.

Ein Clip zur Befestigung eines Sitzbezuges an einem Schaumteil eines Sitzpolsters, insbesondere eines Sitzpolsters eines Fahrzeugsitzes, umfasst zumindest ein Befestigungselement zum temporären formschlüssigen Befestigen des Clips an einem Schaumwerkzeug. Der Clip ist beispielsweise aus Kunststoff ausgebildet.

Ein erfindungsgemäßes Schaumwerkzeug zur Herstellung des Schaumteils des Sitzpolsters umfasst zumindest ein Clipaufnahmeelement zur Aufnahme eines solchen Clips, wobei das Clipaufnahmeelement zumindest ein zum Befestigungselement des Clips korrespondierendes Halteelement aufweist. Das Schaumwerkzeug umfasst zweckmäßigerweise zumindest eine Gussform, d. h. zumindest eine Kavität, welche mit einem Material des herzustellenden Schaumteils auszuschäumen ist, so dass das Schaumteil aus dem Material, d. h. aus einem Schaumstoff, ausgeformt wird.

Eine erfindungsgemäße Herstellungsanordnung zur Herstellung des Schaumteils des Sitzpolsters umfasst das Schaumwerkzeug und zumindest einen formschlüssig daran befestigten oben beschriebenen Clip.

Aus der Ausbildung des Clips und des Schaumwerkzeugs und somit der Herstellungsanordnung ergeben sich die Vorteile, dass der Clip einfach und sicher an einer vorgegebenen Position am Schaumwerkzeug zu befestigen ist, an welcher er durch diese Befestigung während der Herstellung des Schaumteils, d. h. während dessen Schäumens im Schaumwerkzeug, sicher gehalten ist und somit auf vorgegebene Weise in das Schaumteil partiell eingeschäumt wird. Nach dem Schäumen des Schaumteils ist der Clip dann auf einfache und sichere Weise zusammen mit dem Schaumteil aus dem Schaumwerkzeug zu entfernen, so dass insbesondere ein Herauslösen des partiell eingeschäumten Clips aus dem Schaumteil während des Entnehmens des Schaumteils aus dem Schaumwerkzeug vermieden wird. Durch die erfindungsgemäße Lösung wird eine Herstellungszeit des Schaumteils reduziert, da der Clip einfacher und schneller im Schaumwerkzeug zu positionieren ist, es werden eine Abfallmenge und ein Ausschussanteil bei der Herstellung des Schaumteils reduziert und es wird aufgrund der einfachen Befestigung des Clips im Schaumwerkzeug eine Komplexität des Schaumwerkzeugs reduziert, da andere, wesentlich kompliziertere Clipbefestigungen vermieden werden.

In einem erfindungsgemäßen Verfahren zur Herstellung des Schaumteils des Sitzpolsters wird zumindest ein solcher Clip im Schaumwerkzeug formschlüssig befestigt, beispielsweise in das Clipaufnahmeelement des Schaumwerkzeugs eingeclipst. Der Clip wird auf diese Weise ordnungsgemäß positioniert und in dieser Position im Schaumwerkzeug gehalten. Anschließend wird das Schaumteil durch Schäumen im Schaumwerkzeug hergestellt, wobei der zumindest eine Clip partiell eingeschäumt wird. D. h. der Clip wird mit Material zur Ausbildung des Schaumteils partiell umschäumt, so dass er nach dem Aushärten des Schaumteils partiell im Schaumteil angeordnet ist und dadurch formschlüssig und/oder stoffschlüssig am Schaumteil befestigt ist. Bevorzugt werden auf diese Weise mehrere Clips im Schaumteil eingeschäumt. Das auf diese Weise ausgebildete Schaumteil mit mindestens einem eingeschäumten Clip oder einer Mehrzahl eingeschäumter Clips wird nach dem Schäumen aus dem Schaumwerkzeug entnommen, zweckmäßigerweise nach einem vollständigen oder zumindest teilweisen Aushärten des geschäumten Materials des Schaumteils. Die sich aus dem erfindungsgemäßen Verfahren ergebenden Vorteile wurden oben bereits erläutert. Die dort geschilderten Vorteile treffen ebenfalls auf das Verfahren zu, da das Verfahren mit dem erfindungsgemäßen Schaumwerkzeug und mit einem oder mehreren Clips durchgeführt wird.

Das zumindest eine Befestigungselement des Clips ist beispielsweise als eine Rastnase oder als eine Federhakennase ausgebildet. Das zumindest eine zum Befestigungselement des Clips korrespondierende Halteelement des Clipaufnahmeelementes ist beispielsweise als eine Ausnehmung ausgebildet. Auf diese Weise wird während des Einsetzens des Clips in das Schaumwerkzeug eine Rastverbindung zwischen dem Clip und dem Schaumwerkzeug durch Einrasten der Rastnase oder Federhakennase in die korrespondierende Ausnehmung ausgebildet, wodurch der Clip sicher gehalten und exakt positioniert ist. Durch dieses Einrasten zieht sich der Clip selbst in seine vorgegebene Position. Durch die exakte Positionierung des Clips im Schaumwerkzeug und das anschließende Herstellen des Schaumteils durch Ausschäumen des Schaumwerkzeugs sind auch eine exakte Positionierung und eine sichere und feste Anordnung des dann partiell eingeschäumten Clips im Schaumteil sichergestellt. Insbesondere wird dadurch ein nicht korrektes Einschäumen des Clips und somit die Gefahr eines Herauslösens des Clips aus dem Schaumteil vermieden.

Der Clip umfasst zweckmäßigerweise zumindest ein Aufnahmeelement zur Befestigung des Sitzbezuges. Dieses Aufnahmeelement ist beispielsweise als ein inneres Aufnahmeelement ausgebildet. In das Aufnahmeelement ist beispielsweise ein Sitzbezugbefestigungselement des Sitzbezuges einhakbar oder einclipsbar. Hierzu ist das zumindest eine Aufnahmeelement beispielsweise als ein Haken ausgebildet. In einer anderen Ausführungsform ist das zumindest eine Aufnahmeelement beispielsweise als ein Steg ausgebildet, an welchem zumindest ein als ein so genannter Hogring ausgebildetes Sitzbezugbefestigungselement befestigbar ist. Ein solcher Hogring ist eine im Wesentlichen ringförmige Krampe oder Klammer, welche im Ringumfang eine Durchgangsöffnung zur Durchführung des Stegs aufweist, welche danach beispielsweise mittels einer Zange durch Zusammenpressen des Hogrings verschließbar ist.

In einer möglichen Ausführungsform sind das zumindest eine Befestigungselement und das zumindest eine Aufnahmeelement zur Befestigung des Sitzbezuges voneinander abgewandt. Beispielsweise ist das zumindest eine Befestigungselement als ein äußeres Befestigungselement ausgebildet, d. h. es ist nach außen, beispielsweise in Richtung eines äußeren Randbereichs des Clips, ausgerichtet, und das Aufnahmeelement zur Befestigung des Sitzbezuges ist vom Befestigungselement abgewandt und somit nach innen ausgerichtet. Durch die Verwendung zumindest eines Befestigungselementes und zumindest eines Aufnahmeelementes, d. h. zweier verschiedener Elemente, zum Befestigen des Clips am Schaumwerkzeug und zum Befestigen des Sitzbezuges am Clip und über diesen am Schaumteil können sowohl das Befestigungselement als auch das Aufnahmeelement entsprechend ihres jeweiligen Verwendungszwecks ausgebildet werden, so dass keine Kompromisslösungen erforderlich sind. Beispielsweise kann das Aufnahmeelement zur Befestigung des Sitzbezuges hinsichtlich einer dauerhaft stabilen Halterung des Sitzbezuges ausgelegt werden, zum Beispiel als stabiler relativ großer Haken, und das Befestigungselement kann als relativ kleine Rastnase oder Federhakennase ausgebildet werden, welche ein leichtes Einclipsen in das Schaumwerkzeug und ein leichtes Entnehmen zusammen mit dem Schaumteil aus dem Schaumwerkzeug ermöglicht.

Der Clip umfasst erfindungsgemäß einen tellerartigen Bereich zum form- und/oder stoffschlüssigen Befestigen des Clips im Schaumteil durch Einschäumen des tellerartigen Bereichs während der Herstellung des Schaumteils. Der Clip ist somit während der Herstellung des Schaumteils mit Material zur Ausbildung des Schaumteils partiell umschäumbar, so dass er nach dem Aushärten des Schaumteils partiell im Schaumteil angeordnet ist und dadurch formschlüssig und/oder stoffschlüssig am Schaumteil befestigt ist.

Die mit der Erfindung erzielten Vorteile bestehen insbesondere darin, dass der Clip in ein genau platziertes Clipaufnahmeelement im Schaumwerkzeug temporär sehr einfach und selbstplatzierend, insbesondere selbstzentrierend, einclipsbar ist, so dass ein Schaumteil mit passgenau eingeschäumtem Clip einfach herstellbar ist.

Ausführungsbeispiele der Erfindung werden anhand von Zeichnungen näher erläutert. Dabei zeigen:
- Figur 1: eine Ausführungsform eines temporär in einem Clipaufnahmeelement eingeclipsten Clips in Schnittdarstellung,
- Figur 2: die Ausführungsform des Clips gemäß Figur 1 in einer perspektivischen Darstellung,
- Figur 3: eine perspektivische, geschnittene Darstellung der Ausführungsform des im Clipaufnahmeelement eingeclipsten Clips gemäß Figur 1,
- Figur 4: eine weitere Ausführungsform eines temporär in einem Clipaufnahmeelement eingeclipsten Clips in Schnittdarstellung,
- Figur 5: die Ausführungsform des Clips gemäß Figur 4 in einer perspektivischen Darstellung,
- Figur 6: eine perspektivische, geschnittene Darstellung der Ausführungsform des im Clipaufnahmeelement eingeclipsten Clips gemäß Figur 4,
- Figur 7: eine perspektivische, geschnittene Darstellung einer weiteren Ausführungsform eines temporär in einem Clipaufnahmeelement eingeclipsten Clips,
- Figur 8: eine perspektivische Darstellung der Ausführungsform des im Clipaufnahmeelement eingeclipsten Clips gemäß Figur 7,
- Figur 9: eine Befestigung eines Sitzbezuges an einem Schaumteil nach dem Stand der Technik in Schnittdarstellung,
- Figur 10: diese Befestigung eines Sitzbezuges an einem Schaumteil nach dem Stand der Technik gemäß Figur 9 in einer weiteren Schnittdarstellung
- Figur 11: eine weitere Ausführungsform eines temporär in einem Clipaufnahmeelement eingeclipsten Clips in perspektivischer Darstellung,
- Figur 12: die Ausführungsform des Clips gemäß Figur 11 in einer perspektivischen Darstellung,
- Figur 13: eine perspektivische, geschnittene Darstellung der Ausführungsform des Clips gemäß Figur 11 mit Clipaufnahmeelement,
- Figur 14: die Ausführungsform des Clips mit Clipaufnahmeelement gemäß Figur 11 in einer schematischen Schnittdarstellung,
- Figur 15: eine schematische, perspektivische Darstellung der Ausführungsform des Clipaufnahmeelementes gemäß Figur 14,
- Figur 16: eine weitere perspektivische Darstellung der Ausführungsform des Clips gemäß Figur 11,
- Figur 17: eine schematische, geschnittene Darstellung der Ausführungsform des Clips gemäß Figur 11 mit befestigtem Sitzbezug,
- Figur 18: eine weitere schematische, geschnittene Darstellung der Ausführungsform des Clips gemäß Figur 11 mit befestigtem Sitzbezug
- Figur 19: eine perspektivische Darstellung einer weiteren Ausführungsform des Clips, und
- Figur 20: die Ausführungsform des Clips gemäß Figur 19 in einer Seitenansicht.

Einander entsprechende Teile sind in allen Figuren mit den gleichen Bezugszeichen versehen.

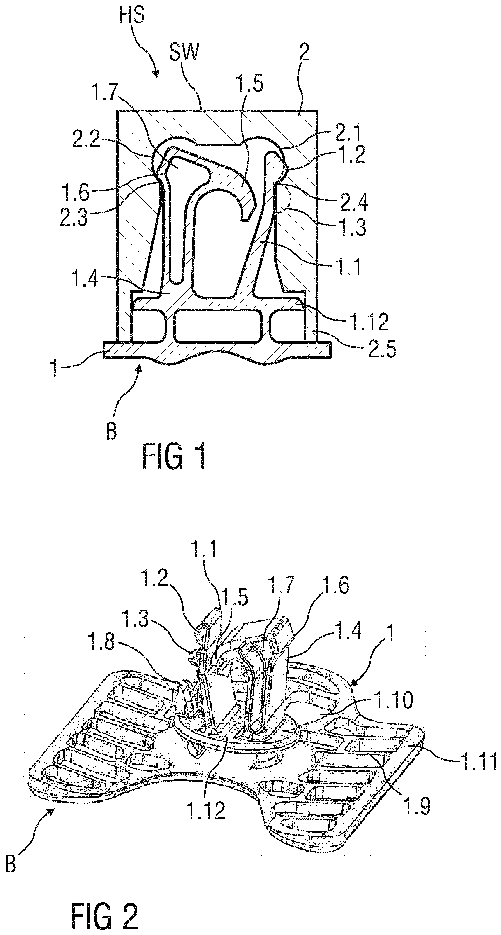

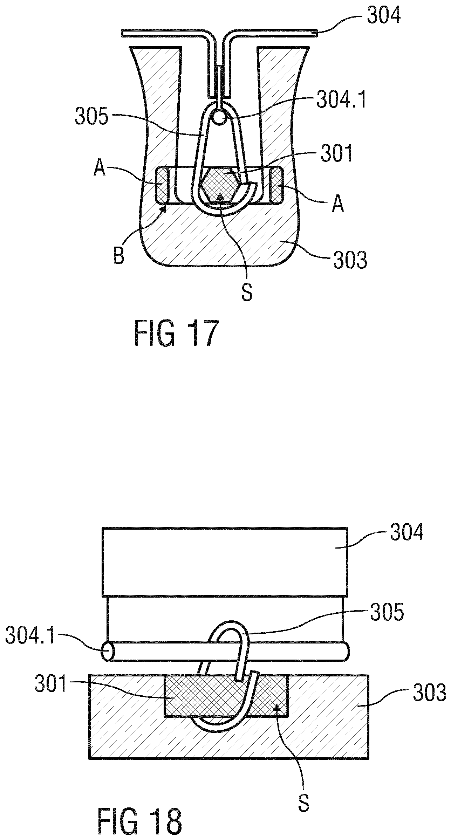

Figur 1 zeigt eine erste Ausführungsform eines Clips 1 in Schnittdarstellung, wobei der Clip 1 nur ausschnittsweise dargestellt ist. Der Clip 1 dient zur Befestigung eines hier nicht dargestellten Sitzbezuges 304 an einem ebenfalls hier nicht dargestellten Schaumteil 303 eines Sitzpolsters. Schaumteil 303 und Sitzbezug 304 sind beispielsweise in den Figuren 17 und 18 zu einem anderen Ausführungsbeispiel dargestellt. Der Clip 1 ist temporär in ein Clipaufnahmeelement 2 eingeclipst. Das Clipaufnahmeelement 2 ist in ein Schaumwerkzeug SW einsetzbar oder dort eingesetzt. Es ist ebenso möglich und vorteilhaft, dass das Clipaufnahmeelement 2 fester Bestandteil des Schaumwerkzeuges SW ist.

In den Figuren ist vom Schaumwerkzeug SW lediglich das Clipaufnahmeelement 2, 102, 202, 302 dargestellt. Bevorzugt wird vor der Herstellung eines Schaumteils 303 eines Sitzpolsters im Schaumwerkzeug SW eine Anzahl von Clipaufnahmeelementen 2 in das Schaumwerkzeug SW eingesetzt. Dabei wird bzw. ist sowohl die Lage der Anzahl von Clipaufnahmeelementen 2 als auch deren axiale Ausrichtung genau vorgegeben. Bevorzugt sind die äußeren Abmessungen des Clipaufnahmeelementes 2 zylindrisch. Dabei ist besonders bevorzugt das Clipaufnahmeelement 2 derart gestaltet, dass es nur in einer definierten axialen Ausrichtung in das Schaumwerkzeug SW einsetzbar ist. Es ist möglich, dass das Clipaufnahmeelement 2 dazu wenigstens eine Nut oder wenigstens eine Feder aufweist, die mit einer entsprechenden Ausgestaltung des Schaumwerkzeuges SW korrespondiert.

Der Clip 1 weist ein elastisches Federelement 1.1 auf, an dessen federndem Ende außenseitig eine Rastnase 1.2 als Befestigungselement 1.2 angeordnet ist, deren Lage und Form mit einer als Halteelement 2.1 ausgebildeten Ausnehmung 2.1 des Clipaufnahmeelementes 2 korrespondiert. Am Federelement 1.1 ist außenseitig zudem eine Zentriernase 1.3 angeordnet, durch welche sichergestellt ist, dass der Clip 1 nur in einer einzigen vorbestimmten Axialausrichtung in das Clipaufnahmeelement 2 in eine mit der Zentriernase 1.3 korrespondierenden Nut einführbar ist. Der Clip 1 weist einen ebenfalls elastisch federnden Federhaken 1.4 auf, an dessen Ende ein an sich bekannter Haken 1.5 als Aufnahmeelement 1.5 zur Befestigung des Sitzbezugs 304 nach innen gerichtet angeordnet ist. Am außenseitigen Ende des Federhakens 1.4 ist als ein weiteres Befestigungselement 1.6 eine Federhakennase 1.6 angeordnet, die in eine als weiteres Halteelement 2.2 ausgebildete weitere Ausnehmung 2.2 des Clipaufnahmeelementes 2 temporär einrastbar ist, nachdem ein Vorsprung 2.3 überwunden wurde. Dem Vorsprung 2.3 gegenüberliegend ist im Clipaufnahmeelement 2 ein weiterer Vorsprung 2.4 angeordnet, nach dessen Überwindung die Rastnase 1.2 in die Ausnehmung 2.1 einrastbar ist.

Nachdem der Clip 1 in der dargestellten Weise lagegenau und axial genau ausgerichtet in das Clipaufnahmeelement 2 temporär eingeclipst und dadurch in seiner Lage im Schaumwerkzeug SW genau positioniert ist, wird durch Schäumen ein Schaumteil 303 eines Sitzpolsters hergestellt, in welches der unten dargestellte Bereich des Clips 1, insbesondere ein tellerartiger Bereich B, fest eingeschäumt ist. Nach dem Aushärten des Schaumteils 303 kann dasselbe gemeinsam mit dem eingeschäumten Clip 1 aus dem Schauwerkzeug SW entnommen werden, während das Clipaufnahmeelement 2 bevorzugt im Schaumwerkzeug SW verbleibt.

Zur besonders genauen Zentrierung und/oder Positionierung des Clips 1 in dem Clipaufnahmeelement 2 weist der Clip 1 in einem bestimmten Abstand vom einzuschäumenden Teil des Clips 1 eine Platte 1.12 auf, welche eine im Querschnitt kreisrunde Geometrie hat. Der Außendurchmesser der Platte 1.12 korrespondiert mit dem Innendurchmesser eines Kragens 2.5 des Clipaufnahmeelementes 2. Der Kragen 2.5 bildet also ein hülsenförmiges Ende des Clipaufnahmeelementes 2.

Figur 2 zeigt den in Figur 1 nur ausschnittsweise in Schnittdarstellung gezeigten Clip 1 in vollständiger perspektivischer Ansicht. Dabei ist dargestellt, dass sowohl das Federelement 1.1. als auch der Federhaken 1.4 auf der Platte 1.12 angeordnet sind. Außerdem ist auf der Platte 1.12 ein vertikales Zentrierelement 1.8 angeordnet, welches dazu dient, dass der Clip 1 nur in einer vorbestimmten axialen Ausrichtung in das hier nicht dargestellte Clipaufnahmeelement 2 temporär einsteckbar ist, bevor das Formteil geschäumt wird. Die Platte 1.12 dient auch dazu, die Kavität des Clipaufnahmeelementes 2 während des Schäumvorganges abzudichten, so dass während des Schäumvorganges kein Schaum in den Bereich des Federelements 1.1 und des Federhakens 1.4 eindringen kann, sodass diese nach dem Entformen des Formteils frei zugänglich sind. Besonders effektiv ist die Abdichtung, wenn die Platte 1.12 im in das Clipaufnahmeelement 2 eingesetzten Zustand eben gegen einen koaxial zum Kragen 2.5 angeordneten Versatz im Clipaufnahmeelement 2 stößt. Bevorzugt ist der Clip 1 derart ausgebildet, dass die Platte 1.12 durch die Federkraft des Federelementes 1.1. und des Federhakens 1.4 axial gegen den Versatz im Clipaufnahmeelement 2 gepresst wird, so dass die Abdichtung besonders sicher ist.

Der dargestellte Clip 1 dient, wenn er in das dargestellte Schaumteil 303 eingeschäumt und damit in dieses integriert ist, zum Einclipsen von hier nicht dargestellten Befestigungselementen eines Sitzbezuges 304, bevorzugt von Drähten mit einem Durchmesser von 2 mm.

Der einzuschäumende Bereich des Clips 1 ist ein tellerartiger Bereich B, der bevorzugt Tellerstege 1.9 aufweist, zwischen denen Telleraussparungen 1.10 angeordnet sind. Die Tellerstege 1.9 und die Telleraussparungen 1.10 werden von einem umlaufenden Tellerrand 1.11 eingefasst. Die Tellerstege 1.9 und die Telleraussparungen 1.10 dienen in an sich bekannter Weise dazu, einen besonders sicheren Verbund zwischen dem herzustellenden Schaumteil und dem Clip 1 zu bewirken.

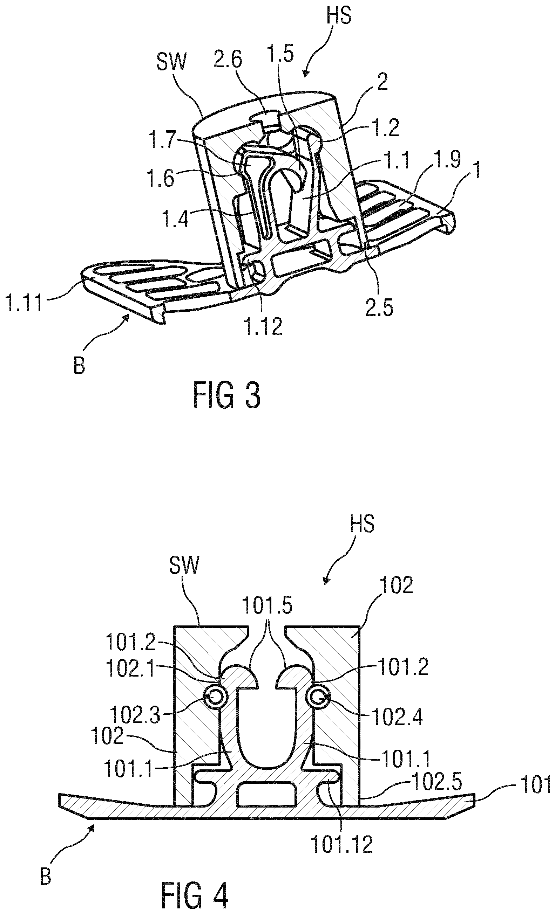

Figur 3 zeigt eine perspektivische Darstellung des Clip 1 in Schnittdarstellung. Das Clipaufnahmeelement 2 weist an seinem schaumwerkzeugseitigen Ende, also dem Zylinderboden, eine zentrische Durchgangsöffnung 2.6 auf, mit der das Clipaufnahmeelement 2 in einer mit der äußeren Form des Clipaufnahmeelements 2 korrespondierenden, hülsenförmigen Vertiefung im Schaumwerkzeug SW stirnseitig befestigbar, insbesondere verschraubbar ist.

Es ist ermöglicht, in definierten, hülsenförmigen Vertiefungen in der Oberfläche des Schaumwerkzeugs SW verschiedene vorkonfektionierte Clipaufnahmeelemente 2 einzufügen, was bevorzugt derart erfolgt, dass eine axiale Einfügung des Clipaufnahmeelements 2 nur in einer bestimmten axialen Ausrichtung ermöglicht ist.

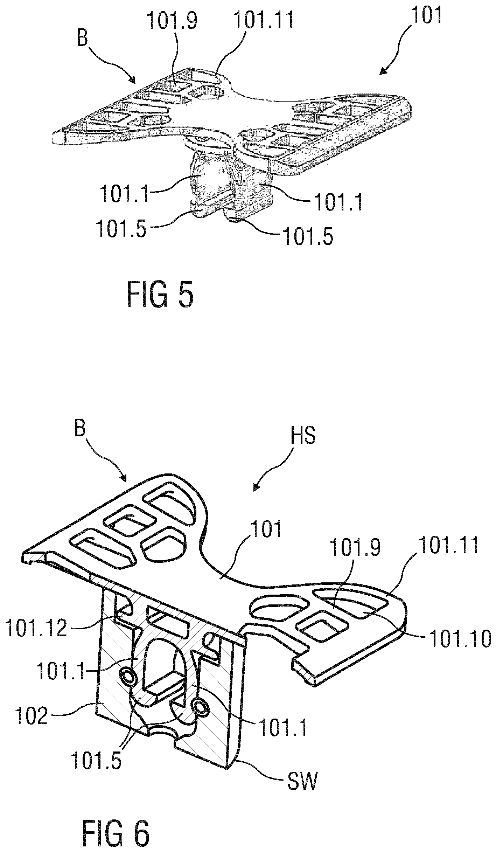

Figur 4 zeigt eine zweite Ausführungsform eines Clips 101 in Schnittdarstellung. Der Clip 101 ist in ein Clipaufnahmeelement 102 temporär eingeclipst. In Figur 5 ist eine perspektivische Darstellung des Clips 101 ohne das Clipaufnahmeelement 102 gezeigt. Der Clip 101 weist zwei gegenüberüberliegende, symmetrisch ausgebildete Federelemente 101.1 auf, welche mit jeweils einem nach innen gerichteten Haken 101.5 als Aufnahmeelement 101.5 versehen sind, welcher zur späteren Befestigung eines Befestigungselementes eines Sitzbezuges 304 am Clip 101 dient, wenn dieser in das Schaumteil 303 eingeschäumt ist. An den Enden der Federelemente 101.1 ist darüber hinaus außenseitig jeweils eine Rastnase 101.2 als Befestigungselement 101.2 angeordnet, mittels derer der Clip 101 in korrespondierende als Ausnehmungen 102.1 ausgebildete Halteelemente 102.1 einclipsbar ist, nachdem die Rastnasen 101.2 Vorsprünge 102.4 des Clipaufnahmeelementes 102 überwunden haben. Bevorzugt sind die Vorsprünge 102.4 längsgerichtet, schlauchartig ausgerichtet, wobei die Federelemente 101.1 bevorzugt einen ebenen, vorzugsweise rechtwinkligen Querschnitt aufweisen. Dadurch ist sichergestellt, dass der Clip 101 in lediglich einer vorbestimmten, axialen Ausrichtung einsteckbar ist. Anders als der in den Figuren 1 bis 3 dargestellte Clip 1 ist der Clip 101 spiegelsymmetrisch ausgebildet. Die Federelemente 101.1 weisen außenseitig jeweils eine horizontale Nut auf, deren Form und Lage mit dem schlauchförmigen Vorsprüngen 102.4 des Clipaufnahmeelementes 102 korrespondieren, so dass der Clip 101 sicher in das Clipaufnahmeelement 102 temporär einclipsbar ist. Der Clip 101 weist eine Platte 101.12 auf, deren Form und Funktion mit der in den Figuren 1 bis 3 beschriebenen Platte 1.12 korrespondieren. Ebenso weist das Clipaufnahmeelement 102 einen Kragen 102.5 auf, dessen Form und Funktion mit dem in den Figuren 1 bis 3 beschriebenen Kragen 2.5 korrespondieren.

Figur 6 zeigt eine zugehörige, perspektivische Schnittdarstellung des in das Clipaufnahmeelement 102 eingeclipsten Clips 101. Dabei ist erkennbar, dass der einzuschäumende Teil des Clips 101 eine Anzahl von Tellerstegen 101.9 und Telleraussparungen 101.10 aufweist, welche von einem Tellerrand 101.11 umfasst sind.

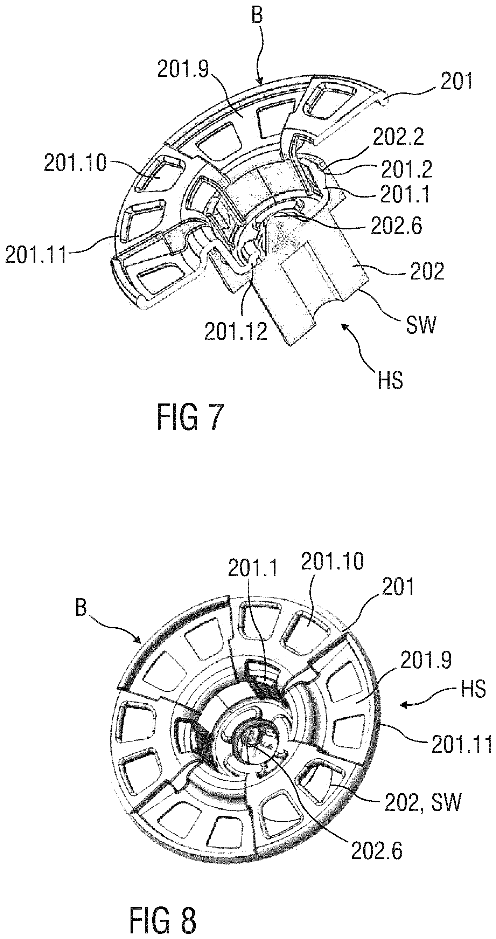

Figur 7 zeigt eine perspektivische, geschnittene Darstellung einer dritten Ausführungsform eines Clips 201, der als Bladder-Clip bezeichnet wird. Der Clip 201 weist eine im Wesentlichen tellerförmige Ausgestaltung auf, wobei der einzuschäumende Teil des Clips 201 aus Tellerstegen 201.9, Telleraussparungen 201.10 und einem Tellerrand 201.11 gebildet ist. Der Randbereich des tellerartigen, einzuschäumenden Bereiches des Clips 201 ist alternierend höhenversetzt, wodurch eine besonders effektive Einschäumung des Clips 201 in das Schaumteil 303 ermöglicht ist.

Der in das Clipaufnahmeelement 202 temporär eingeclipste Bereich des Clips 201 weist eine annähernd hülsenförmige Gestalt auf, wobei auf einer Platte 201.12 eine Anzahl von Federelementen 201.1 angeordnet ist, welche radial federnd ausgebildet sind. An den Außenseiten der Federelemente 201.1 ist jeweils eine Rastnase 201.2 als Befestigungselement 201.2 angeordnet, die in korrespondierende als Ausnehmungen 202.2 ausgebildete Halteelemente 202.2 des Clipaufnahmeelementes 202 temporär einclipsbar sind.

Das Clipaufnahmeelement 202 weist eine zentrische Zentriererhebung 202.6 auf, welche zur Zentrierung des Clips 201 in eine kreisrunde, zentrische Aussparung der Platte 201.12 eingreift. Figur 8 zeigt eine vollständige perspektivische Ansicht des Clips 201, welcher drei Federelemente 201.1 aufweist.

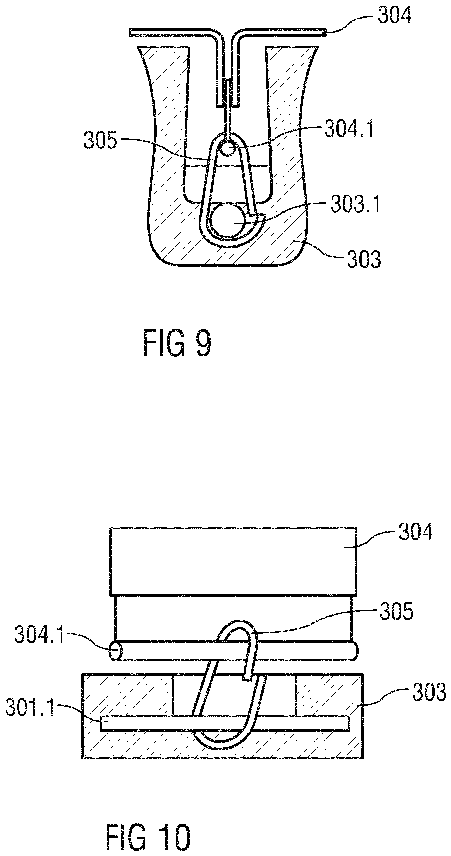

Figur 9 zeigt eine Befestigung eines Sitzbezuges 304 an einem Schaumteil 303 nach dem Stand der Technik in einem schematischen Schnitt. Das Schaumteil 303 ist Bestandteil eines Sitzpolsters für einen Fahrzeugsitz. In das Schaumteil 303 ist ein Metalldraht 303.1 partiell eingeschäumt; und zwar derart, dass seine Enden eingeschäumt sind und ein mittlerer Bereich nicht eingeschäumt ist. Der Metalldraht 303.1 dient der Befestigung eines Sitzbezuges 304, an dessen Unterseite ein Draht 304.1 als Befestigungselement angeordnet ist. Der Draht 304.1 ist vorzugsweise aus Metall gefertigt. Der Draht 304.1 ist mittels eines Hogrings 305 mit dem Metalldraht 303.1 verbunden, sodass der Sitzbezug 304 an dem Schaumteil 303 befestigt ist. Der Hogring 305 ist dabei in dem mittleren, also in dem nicht eingeschäumten Bereich des Metalldrahtes 303.1 angeordnet. Der Hogring 305 ist vorzugsweise eine geschlossene Krampe, die besonders bevorzugt aus Metall oder Kunststoff besteht.

Figur 10 zeigt dieselbe Befestigung des Sitzbezuges 304 an dem Schaumteil 303 nach dem Stand der Technik in einem weiteren schematischen Schnitt. Die Schnittebene ist hier gegenüber der Schnittebene von Figur 9 um 90° gedreht.

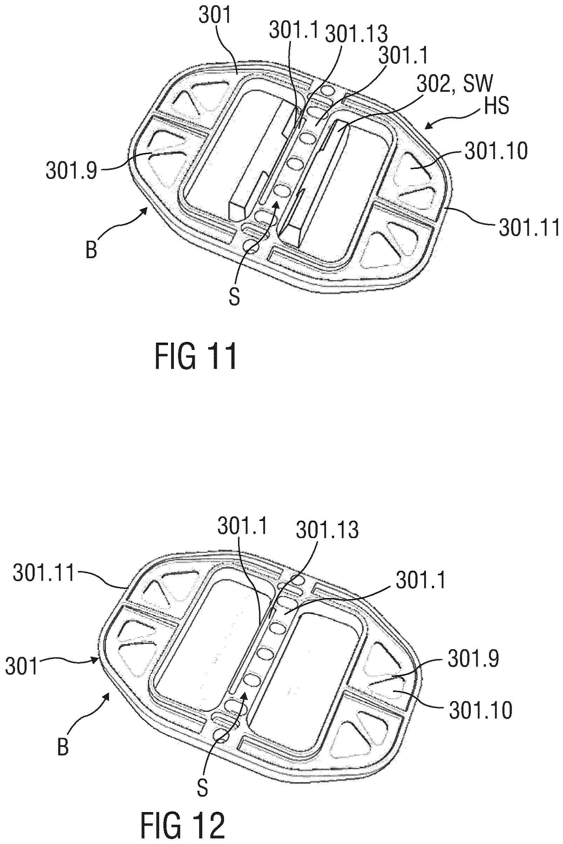

Figur 11 zeigt eine Ausführungsform eines Clips 301 in Schnittdarstellung. Der Clip 301 dient zur Befestigung des hier nicht dargestellten Sitzbezuges 304 an dem hier ebenfalls nicht dargestellten Schaumteil 303 des Sitzpolsters. Der Clip 301 ist temporär in ein Clipaufnahmeelement 302 eingeclipst. Das Clipaufnahmeelement 302 ist in ein nicht dargestelltes Schaumwerkzeug SW einsetzbar oder dort eingesetzt, d. h. von dem Schaumwerkzeug SW ist hier nur das Clipaufnahmeelement 302 dargestellt. Es ist ebenso möglich, dass das Clipaufnahmeelement 302 fester Bestandteil des Schaumwerkzeuges ist. Bevorzugt wird vor der Herstellung eines Schaumteils 303 eines Sitzpolsters im Schaumwerkzeug SW eine Anzahl von Clipaufnahmeelementen 302 in das Schaumwerkzeug SW eingesetzt. Dabei wird bzw. ist sowohl die Lage der Anzahl von Clipaufnahmeelementen 302 als auch deren axiale Ausrichtung genau vorgegeben. Bevorzugt sind die äußeren Abmessungen des Clipaufnahmeelementes 302 quaderförmig. Dadurch ist besonders bevorzugt das Clipaufnahmeelement 302 derart gestaltet, dass es nur in zwei definierten Positionen axial in das Schaumwerkzeug SW einsetzbar ist. Die äußere Form des Clipaufnahmeelementes 302 korrespondiert mit einer entsprechenden Ausgestaltung des Schaumwerkzeuges SW und ist in diesem fixierbar.

Der Clip 301 weist einen nicht einzuschäumenden mittleren Steg S als Aufnahmeelement S zur Befestigung des Sitzbezugs 304 auf, der aus zwei parallelen elastischen Federelementen 301.1 gebildet ist. Die beiden Federelemente 301.1 sind durch einen Schlitz 301.13 voneinander beabstandet. Dadurch, dass der Clip 301 aus Kunststoff gebildet ist, ist der Steg S besonders flexibel, wobei das links gezeigte Federelement 301.1 eine wesentlich geringere Breite als das rechts gezeigte Federelement 301.1 hat, wodurch die Flexibilität des Steges S im Wesentlichen durch die Verformbarkeit des links gezeigten Federelementes 301.1 erzielt wird. Das rechts gezeigte, wesentlich stärkere Federelement 301.1 ist besonders stabil, um den Sitzbezug 304 sicher zu halten. D. h. seine Federwirkung ist relativ gering oder geht im Wesentlichen gegen Null, so dass es ein im Wesentlichen starres und steifes Stegelement ist. Das Ein- und Ausclipsen des Clips 301 erfolgt dann im Wesentlichen durch Verformen des links gezeigten, wesentlich dünneren und wesentlich flexibleren Federelementes 301.1.

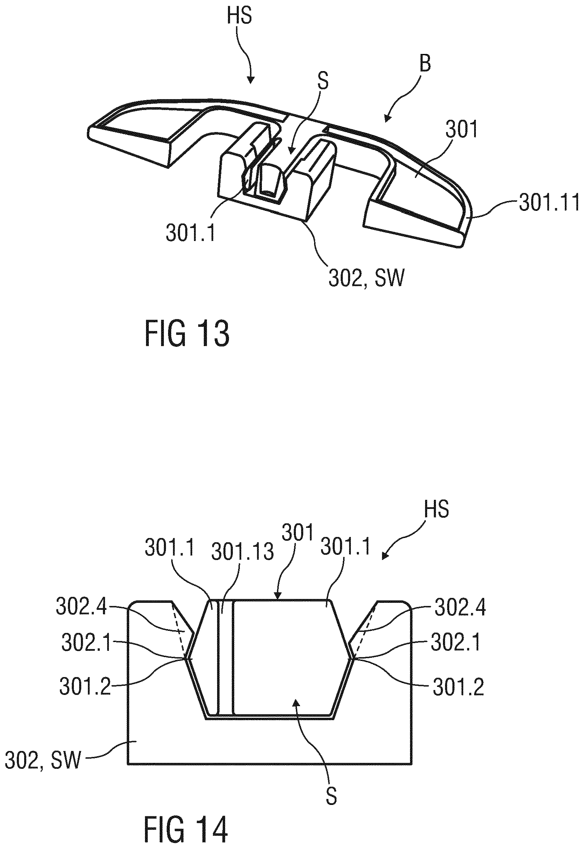

Am rechten äußeren Rand des rechts gezeigten Federelementes 301.1 und am linken Rand des links gezeigten Federelementes 301.1 ist jeweils eine prismatische, hier nicht gezeigte Rastnase 301.2 als Befestigungselement 301.2 angeordnet oder ausgeformt, deren Lage und Form mit jeweils einem hier ebenfalls nicht gezeigten als Ausnehmung 302.1 ausgebildeten Halteelement 302.1 des Clipaufnahmeelementes 302 korrespondiert. Diese Korrespondenz ist in Figur 14 näher erläutert. Durch diese Korrespondenz ist sichergestellt, dass der Clip 301 nur in einer einzigen vorbestimmten Axialausrichtung in das Clipaufnahmeelement 302 einführbar ist.

Nachdem der Clip 301 in der dargestellten Weise lagegenau und axial genau ausgerichtet in das Clipaufnahmeelement 302 temporär eingeclipst und dadurch in seiner Lage im Schaumwerkzeug SW genau positioniert ist, wird durch Schäumen ein Schaumteil 303 eines Sitzpolsters hergestellt, in welches die rechts und links dargestellten Bereiche des Clips 301 fest eingeschäumt werden. Nach dem Aushärten des Schaumteils 303 kann dasselbe gemeinsam mit dem eingeschäumten Clip 301 aus dem Schauwerkzeug SW entnommen werden, während das Clipaufnahmeelement 302 bevorzugt im Schaumwerkzeug SW verbleibt.

Figur 12 zeigt den in Figur 11 gezeigten Clip 301 in vollständiger perspektivischer Ansicht ohne das Clipaufnahmeelement 302. Der dargestellte Clip 301 dient, wenn er in das hier nicht dargestellte Schaumteil 303 eingeschäumt und damit in dieses integriert ist, zur Aufnahme von hier nicht dargestellten Hogringen 305 zur Befestigung eines hier nicht dargestellten Sitzbezuges 304. Dabei werden einer oder mehrere Hogringe 305 am Steg S befestigt.

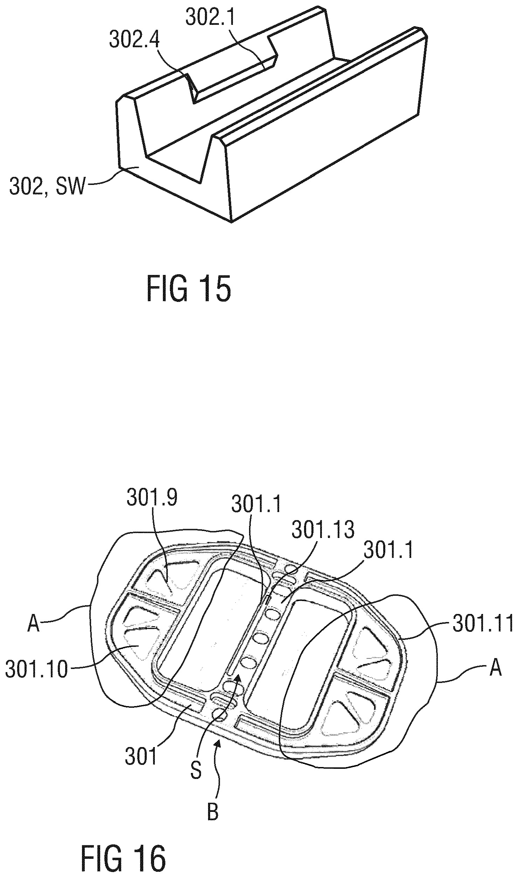

Zwei einzuschäumende Bereiche des Clips 301, welche in Figur 16 näher erläutert sind, weisen bevorzugt Tellerstege 301.9 auf, zwischen denen Telleraussparungen 301.10 angeordnet sind. Die Tellerstege 301.9 und die Telleraussparungen 301.10 werden von einem umlaufenden Tellerrand 301.11 eingefasst. Die Tellerstege 301.9 und die Telleraussparungen 301.10 dienen in an sich bekannter Weise dazu, einen besonders sicheren Verbund zwischen dem herzustellenden Schaumteil 303 und dem Clip 301 zu bewirken.

Figur 13 zeigt eine perspektivische Darstellung des Clip 301 in Schnittdarstellung. Das Clipaufnahmeelement 302 weist an seinem schaumwerkzeugseitigen Ende eine rechteckige Grundfläche auf, mit der das Clipaufnahmeelement 302 in einer mit der äußeren Form des

Clipaufnahmeelements 302 korrespondierenden, quaderförmigen Vertiefung im Schaumwerkzeug SW fixierbar, insbesondere verschraubbar oder verklemmbar ist.

Es ist ermöglicht, in definierten Vertiefungen in der Oberfläche des Schaumwerkzeugs verschiedene vorkonfektionierte Clipaufnahmeelemente 302 einzufügen, was bevorzugt derart erfolgt, dass eine axiale Einfügung des Clipaufnahmeelements 302 nur in einer bestimmten axialen Ausrichtung ermöglicht ist. In einer möglichen Ausführungsform kann wegen der spiegelsymmetrischen Ausbildung des Clipaufnahmeelements 302 dessen Position um 180° um die Hochachse gedreht werden, um die gleiche axiale Ausrichtung zu erzielen. Ebenso kann die Position des Clipaufnahmeelements 302 um 180° um die Längsachse gedreht werden, um die gleiche axiale Ausrichtung zu erzielen.

Wegen der spiegelsymmetrischen Ausbildung des Clips 301 kann dessen Position um 180° um die Hochachse gedreht werden, um die gleiche axiale Ausrichtung zu erzielen. Ebenso kann die Position des Clips 301 um 180° um die Längsachse gedreht werden, um die gleiche axiale Ausrichtung zu erzielen. Damit sind zum Einsetzen des Clips 301 in das Clipaufnahmeelement 302 vier verschiedene Positionen möglich, so dass beim Einsetzen die Positionierung des Clips 301 besonders einfach und mit geringer Fehlerwahrscheinlichkeit möglich ist.

Figur 14 zeigt eine schematische, ausschnittsweise Schnittdarstellung des Clips 301 mit Clipaufnahmeelement 302. Jedes der beiden Federelemente 301.1 weist außenseitig jeweils eine prismatische Rastnase 301.2 auf, die in eine Vertiefung 302.1 des Clipaufnahmeelementes 302 temporär einrastbar ist, nachdem ein Vorsprung 302.4 des Clipaufnahmeelementes 302 überwunden wurde. Das Clipaufnahmeelement 302 ist spiegelsymmetrisch ausgebildet. Beim Einclipsen des Clips 301 werden dessen parallele Federelemente 301.1 gegeneinander gedrückt oder zumindest das dünnere Federelement 301.1 wird gegen das dickere andere Federelement 301.1 gedrückt, wobei sich die Breite des Schlitzes 301.13 und somit die Breite des Stegs S reduziert, so dass der Clips 301 einclipsbar ist.

Figur 15 zeigt eine perspektivische Darstellung des Clipaufnahmeelementes 302, das im Wesentlichen rinnenförmig ist, wobei zwei sich gegenüberliegende innere ebene Wandungen konisch verlaufen, so dass sich die Innenbreite der Rinne nach unten verkleinert. An jeder seitlichen Wandung ist jeweils der prismatische Vorsprung 302.4 angeordnet, der eine obere und eine untere im Wesentlichen ebene Fläche aufweist. Durch die jeweils untere Fläche des Vorsprungs 302.4 und die korrespondierende innere Wandung der Rinne wird die vorbeschriebene Ausnehmung 302.1 gebildet.

Figur 16 zeigt eine perspektivische Darstellung des Clips 301, wobei dessen beide einzuschäumende Teller-Teilbereiche A gezeigt sind. Der aus den beiden parallelen Federelementen 301.1, welche durch den Schlitz 301.13 beabstandet sind, gebildete Steg S wird nicht mit eingeschäumt.

Die Figuren 17 und 18 zeigen zwei vereinfachte, schematische Schnittdarstellungen eines Ausschnittes eines Schaumteils 303, in welches ein Clip 301 partiell eingeschäumt ist. Dabei sind die zwei Teller-Teilbereiche A eingeschäumt und der Steg S des Clips 301 ist nicht eingeschäumt. Der Sitzbezug 304 ist mit dem Schaumteil 303 verbunden, indem ein Draht 304.1, welcher mit dem Sitzbezug 304 verbunden ist, mittels eines Hogrings 305 mit dem Steg S, der als Aufnahmeelement S zur Befestigung des Sitzbezugs 304 dient, verbunden ist, welcher wiederum mit dem Schaumteil 303 verbunden ist. Bevorzugt verlaufen der Draht 304.1 und der Steg S im Wesentlichen parallel zueinander.

In allen dargestellten Ausführungsbeispielen bilden das Schaumwerkzeug SW und zumindest ein formschlüssig daran befestigter Clip 1, 101, 201, 301 eine Herstellungsanordnung HS zur Herstellung eines Schaumteils 303 eines Sitzpolsters.

Die dargestellten Ausführungsbeispiele der Clips 1, 101, 201, 301 weisen jeweils einen tellerartigen Bereich B auf, welcher während der Herstellung des Schaumteils 303 in das Schaumteil 303 eingeschäumt wird, so dass der Clip 1, 101, 201, 301 danach form- und/oder stoffschlüssig mit dem Schaumteil 303 verbunden ist.

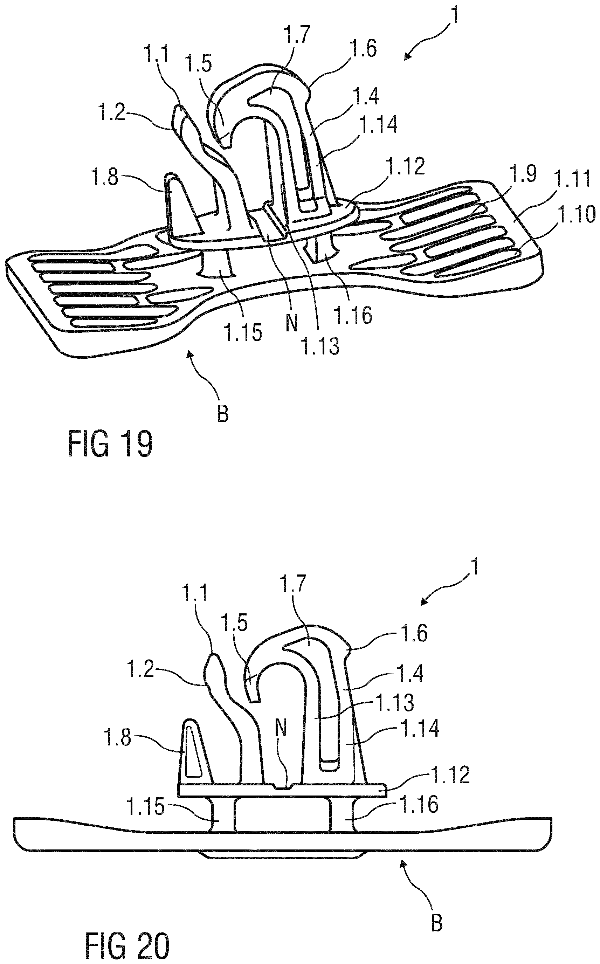

Die Figuren 19 und 20 zeigen eine weitere Ausführungsform des Clips 1, welche eine Abwandlung der in den Figuren 1 bis 3 dargestellten Ausführungsform des Clips 1 darstellt. Der Clip 1 ist in Figur 19 in einer perspektivischen Ansicht und in Figur 20 in einer Seitenansicht gezeigt. Der Clip 1 weist das elastische Federelement 1.1 auf, an dessen federndem Ende außenseitig die Rastnase 1.2 als Befestigungselement 1.2 angeordnet ist, deren Lage und Form mit der als Halteelement 2.1 ausgebildeten Ausnehmung 2.1 des Clipaufnahmeelementes 2 korrespondiert. Die Zentrienase 1.3 außenseitig am Federelement 1.1 ist hier nicht vorgesehen, kann aber in anderen Ausführungsformen des Clips 1 auch zusammen mit den anderen Merkmalen der in den Figuren 19 und 20 dargestellten Ausführungsform des Clips 1 vorhanden sein.

Der Clip 1 weist den ebenfalls elastisch federnden Federhaken 1.4 auf, an dessen Ende der an sich bekannte Haken 1.5 als Aufnahmeelement 1.5 zur Befestigung des Sitzbezugs 304 nach innen gerichtet angeordnet ist. Am außenseitigen Ende des Federhakens 1.4 ist als weiteres Befestigungselement 1.6 die Federhakennase 1.6 angeordnet, die in die als weiteres Halteelement 2.2 ausgebildete weitere Ausnehmung 2.2 des Clipaufnahmeelementes 2 temporär einrastbar ist, nachdem der Vorsprung 2.3 überwunden wurde. Wie bereits zum Ausführungsbeispiel gemäß den Figuren 1 bis 3 beschrieben, ist dem Vorsprung 2.3 gegenüberliegend im Clipaufnahmeelement 2 der weitere Vorsprung 2.4 angeordnet, nach dessen Überwindung die Rastnase 1.2 in die Ausnehmung 2.1 einrastbar ist. Des Weiteren weist der Federhaken 1.4 eine Querschnittsschwächung 1.7 auf, beispielsweise in Form einer Ausnehmung, um beispielsweise eine Elastizität des Federhakens 1.4 zu erhöhen. In der Ausführungsform gemäß den Figuren 1 bis 3 kann der Federhaken 1.4 ebenfalls eine solche Querschnittsschwächung 1.7 aufweisen.

Nachdem der Clip 1 in das Clipaufnahmeelement 2 temporär eingeclipst und dadurch in seiner Lage im Schaumwerkzeug SW genau positioniert ist, wird durch Schäumen das Schaumteil 303 des Sitzpolsters hergestellt, in welches der unten dargestellte Bereich des Clips 1, insbesondere der tellerartige Bereich B, fest eingeschäumt ist. Nach dem Aushärten des Schaumteils 303 kann dasselbe gemeinsam mit dem eingeschäumten Clip 1 aus dem Schauwerkzeug SW entnommen werden, während das Clipaufnahmeelement 2 bevorzugt im Schaumwerkzeug SW verbleibt.

Zur besonders genauen Zentrierung und/oder Positionierung des Clips 1 in dem Clipaufnahmeelement 2 weist der Clip 1 in einem bestimmten Abstand vom einzuschäumenden Teil des Clips 1 die Platte 1.12 auf, welche eine im Querschnitt kreisrunde oder ovale Geometrie hat. Auch die Platte 1.12 des in den Figuren 1 bis 3 dargestellten Ausführungsbeispiels kann diese ovale Geometrie aufweisen. Der Außendurchmesser und/oder die Außenumfangsform der Platte 1.12 korrespondiert mit dem Innendurchmesser oder der Innenumfangsform des Kragens 2.5 des Clipaufnahmeelementes 2. Der Kragen 2.5 bildet also ein hülsenförmiges Ende des Clipaufnahmeelementes 2.

Wie in den Figuren 19 und 20 dargestellt, sind sowohl das Federelement 1.1 als auch der Federhaken 1.4 auf der Platte 1.12 angeordnet. Die Platte 1.12 weist in einem mittleren, zwischen dem Federelement 1.1 und dem Federhaken 1.4 angeordneten Bereich eine Nut N auf, d. h. eine Dickenreduzierung der Platte 1.12. Außerdem ist auf der Platte 1.12 ein vertikales Zentrierelement 1.8 angeordnet, welches dazu dient, dass der Clip 1 nur in einer vorbestimmten axialen Ausrichtung in das hier nicht dargestellte Clipaufnahmeelement 2 temporär einsteckbar ist, bevor das Formteil geschäumt wird.

Die Platte 1.12 dient auch dazu, die Kavität des Clipaufnahmeelementes 2 während des Schäumvorganges abzudichten, so dass während des Schäumvorganges kein Schaum in den Bereich des Federelements 1.1 und des Federhakens 1.4 eindringen kann, sodass diese nach dem Entformen des Formteils frei zugänglich sind. Besonders effektiv ist die Abdichtung, wenn die Platte 1.12 im in das Clipaufnahmeelement 2 eingesetzten Zustand eben gegen den koaxial zum Kragen 2.5 angeordneten Versatz im Clipaufnahmeelement 2 stößt. Bevorzugt ist der Clip 1 derart ausgebildet, dass die Platte 1.12 durch die Federkraft des Federelementes 1.1. und des Federhakens 1.4 axial gegen den Versatz im Clipaufnahmeelement 2 gepresst wird, so dass die Abdichtung besonders sicher ist.

Der dargestellte Clip 1 dient, wenn er in das Schaumteil 303 eingeschäumt und damit in dieses integriert ist, zum Einclipsen von Befestigungselementen eines Sitzbezuges 304, bevorzugt von Drähten mit einem Durchmesser von 2 mm.

Der einzuschäumende Bereich des Clips 1 ist ein tellerartiger Bereich B, der bevorzugt Tellerstege 1.9 aufweist, zwischen denen Telleraussparungen 1.10 angeordnet sind. Die Tellerstege 1.9 und die Telleraussparungen 1.10 werden vom umlaufenden Tellerrand 1.11 eingefasst. Die Tellerstege 1.9 und die Telleraussparungen 1.10 dienen in an sich bekannter Weise dazu, einen besonders sicheren Verbund zwischen dem herzustellenden Schaumteil und dem Clip 1 zu bewirken.

Vorteilhaft bei dem Clip 1 ist die Befestigung des Federhakens 1.4, welcher das als Haken 1.5 ausgebildete Aufnahmeelement 1.5 zur Befestigung des Sitzbezugs 304 aufweist, über zweckmäßigerweise zwei Materialstege 1.13, 1.14 an der Platte 1.12. Bricht einer der Materialstege 1.13, 1.14, beispielsweise bei einer zu großen Belastung, wird ein vollständiges Ablösen des als Haken 1.5 ausgebildeten Aufnahmeelements 1.5 vom Clip 1 und beispielsweise ein unkontrolliertes Bewegen des als Haken 1.5 ausgebildeten Aufnahmeelements 1.5 im Fahrzeug durch den jeweiligen anderen Materialsteg 1.14, 1.13 verhindert.

Ebenso ist die Platte 1.12 zweckmäßigerweise mittels zweier Beine 1.15, 1.16 mit dem tellerartigen Bereich B verbunden. Dadurch wird beim Brechen eines der Beine 1.15, 1.16, beispielsweise aufgrund einer zu großen Belastung, ein vollständiges Ablösen des oberen Bereichs des Clips vom tellerartigen Bereich B durch das andere Bein 1.16, 1.15 verhindert, so dass ein unkontrolliertes Bewegen abgetrennter Clipteile im Fahrzeug verhindert wird. Die Nut N und/oder die Beine 1.15, 1.16 und/oder die Materialstege 1.13, 1.14 können auch bei der in den Figuren 1 bis 3 dargestellten Ausführungsform des Clips 1 vorgesehen sein.

### Bezugszeichenliste

- 1,101,201,301: Clip
- 1.1, 101.1, 201.1, 301.1: Federelement
- 1.2, 101.2, 201.2, 301.2: Rastnase, Befestigungselement
- 1.3: Zentriernase
- 1.4: Federhaken
- 1.5, 101.5: Haken, Aufnahmeelement
- 1.6: Federhakennase, Befestigungselement
- 1.7: Querschnittsschwächung
- 1.8: Zentrierelement
- 1.9, 101.9, 201.9, 301.9: Tellersteg
- 1.10, 101.10, 201.10, 301.10: Telleraussparung
- 1.11, 101.11, 201.11, 301.11: Tellerrand
- 1.12, 101.12, 201.12: Platte
- 1.13, 1.14: Materialsteg
- 1.15, 1.16: Bein
- 2, 102, 202, 302: Clipaufnahmeelement
- 2.1, 102.1, 302.1: Ausnehmung, Halteelement
- 2.2, 202.2: Ausnehmung, Halteelement
- 2.3: Vorsprung
- 2.4, 102.4, 302.4: Vorsprung
- 2.5, 102.5: Kragen
- 2.6: Durchgangsöffnung
- 202.6: Zentriererhebung
- 301.13: Schlitz
- 303: Schaumteil
- 303.1: Metalldraht
- 304: Sitzbezug
- 304.1: Draht
- 305: Hogring
- A: Teller-Teilbereich
- B: tellerartiger Bereich
- HS: Herstellungsanordnung
- N: Nut
- S: Steg, Aufnahmeelement
- SW: Schaumwerkzeug

## Patentansprüche

1. Clip (1, 101, 201, 301) zur Befestigung eines Sitzbezuges (304) an einem Schaumteil (303) eines Sitzpolsters, umfassend zumindest ein Befestigungselement (1.2, 101.2, 201.2, 301.2, 1.6) zum temporären formschlüssigen Befestigen des Clips (1, 101, 201, 301) an einem Schaumwerkzeug (SW),
**gekennzeichnet durch** einen tellerartigen Bereich (B) zum form- und/oder stoffschlüssigen Befestigen des Clips (1, 101, 201, 301) im Schaumteil (303) durch Einschäumen des tellerartigen Bereichs (B) während der Herstellung des Schaumteils (303).

2. Schaumwerkzeug (SW) zur Herstellung eines Schaumteils (303) eines Sitzpolsters, umfassend zumindest ein Clipaufnahmeelement (2, 102, 202, 302) zur Aufnahme eines Clips (1, 101, 201, 301) zur Befestigung eines Sitzbezuges (304) am Schaumteil (303) des Sitzpolsters, wobei der Clip (1, 101, 201, 301) zumindest ein Befestigungselement (1.2, 101.2, 201.2, 301.2, 1.6) zum temporären formschlüssigen Befestigen des Clips (1, 101, 201, 301) am Schaumwerkzeug (SW) umfasst, wobei das Clipaufnahmeelement (2, 102, 202, 302) zumindest ein zum Befestigungselement (1.2, 101.2, 201.2, 301.2, 1.6) des Clips (1, 101, 201, 301) korrespondierendes Halteelement (2.1, 102.1, 302.1, 2.2, 202.2) aufweist.

3. Schaumwerkzeug (SW) nach Anspruch 2, **dadurch gekennzeichnet, dass** das zumindest eine zum Befestigungselement (1.2, 101.2, 201.2, 301.2, 1.6) des Clips (1, 101, 201, 301) korrespondierende Halteelement (2.1, 102.1, 302.1, 2.2, 202.2) des Clipaufnahmeelementes (2, 102, 202, 302) als eine Ausnehmung (2.1, 102.1, 302.1, 2.2, 202.2) ausgebildet ist.

4. Herstellungsanordnung (HS) zur Herstellung eines Schaumteils (303) eines Sitzpolsters, umfassend ein Schaumwerkzeug (SW) nach Anspruch 2 oder 3 und zumindest einen formschlüssig daran befestigten Clip (1, 101, 201, 301) zur Befestigung eines Sitzbezuges (304) am Schaumteil (303) des Sitzpolsters, wobei der Clip (1, 101, 201, 301) zumindest ein Befestigungselement (1.2, 101.2, 201.2, 301.2, 1.6) zum temporären formschlüssigen Befestigen des Clips (1, 101, 201, 301) am Schaumwerkzeug (SW) umfasst.

5. Herstellungsanordnung (HS) nach Anspruch 4, **dadurch gekennzeichnet, dass** das zumindest eine Befestigungselement (1.2, 101.2, 201.2, 301.2, 1.6) als eine Rastnase (1.2, 101.2, 201.2, 301.2) oder als eine Federhakennase (1.6) ausgebildet ist.

6. Herstellungsanordnung (HS) nach Anspruch 4 oder 5, **dadurch gekennzeichnet, dass** der Clip (1, 101, 201, 301) zumindest ein Aufnahmeelement (1.5, 101.5, S) zur Befestigung des Sitzbezuges (304) umfasst.

7. Herstellungsanordnung (HS) nach Anspruch 6, **dadurch gekennzeichnet, dass** das zumindest eine Aufnahmeelement (1.5, 101.5, S) als ein Haken (1.5, 101.5) oder als ein Steg (S) ausgebildet ist.

8. Herstellungsanordnung (HS) nach Anspruch 6 oder 7, **dadurch gekennzeichnet, dass** das zumindest eine Befestigungselement (1.2, 101.2, 201.2, 301.2, 1.6) und das zumindest eine Aufnahmeelement (1.5, 101.5, S) voneinander abgewandt sind.

9. Herstellungsanordnung (HS) nach einem der Ansprüche 4 bis 8, **dadurch gekennzeichnet, dass** der Clip (1, 101, 201, 301) einen tellerartigen Bereich (B) zum form- und/oder stoffschlüssigen Befestigen des Clips (1, 101, 201, 301) im Schaumteil (303) durch Einschäumen des tellerartigen Bereichs (B) während der Herstellung des Schaumteils (303) umfasst.

10. Verfahren zur Herstellung eines Schaumteils (303) eines Sitzpolsters, wobei zumindest ein Clip (1, 101, 201, 301) zur Befestigung eines Sitzbezuges (304) am Schaumteil (303) des Sitzpolsters, der zumindest ein Befestigungselement (1.2, 101.2, 201.2, 301.2, 1.6) zum temporären formschlüssigen Befestigen des Clips (1, 101, 201, 301) am Schaumwerkzeug (SW) umfasst, in einem Schaumwerkzeug (SW) nach Anspruch 2 oder 3 formschlüssig befestigt wird und anschließend das Schaumteil (303) durch Schäumen im Schaumwerkzeug (SW) hergestellt wird, wobei der zumindest eine Clip (1, 101, 201, 301) partiell eingeschäumt wird.

## Claims

1. Clip (1, 101, 201, 301) for securing a seat cover (304) to a foam part (303) of a seat cushion, comprising at least one securing element (1.2, 101.2, 201.2, 301.2, 1.6) for temporarily securing the clip (1, 101, 201, 301) to a foaming tool (SW) by a form fit,
**characterized by** a plate-like region (B) for securing the clip (1, 101, 201, 301) in the foam part (303) by a form fit and/or a material bond by virtue of the plate-like region (B) being foamed in place during production of the foam part (303).

2. Foaming tool (SW) for producing a foam part (303) of a seat cushion, comprising at least one clip-accommodating element (2, 102, 202, 302) for accommodating a clip (1, 101, 201, 301) for securing a seat cover (304) to the foam part (303) of the seat cushion, wherein the clip (1, 101, 201, 301) comprises at least one securing element (1.2, 101.2, 201.2, 301.2, 1.6) for temporarily securing the clip (1, 101, 201, 301) to the foaming tool (SW) by a form fit, wherein the clip-accommodating element (2, 102, 202, 302) has at least one retaining element (2.1, 102.1, 302.1, 2.2, 202.2), which corresponds to the securing element (1.2, 101.2, 201.2, 301.2, 1.6) of the clip (1, 101, 201, 301) .

3. Foaming tool (SW) according to Claim 2, **characterized in that** the at least one retaining element (2.1, 102.1, 302.1, 2.2, 202.2) of the clip-accommodating element (2, 102, 202, 302), said retaining element corresponding to the securing element (1.2, 101.2, 201.2, 301.2, 1.6) of the clip (1, 101, 201, 301), is designed in the form of a recess (2.1, 102.1, 302.1, 2.2, 202.2).

4. Production arrangement (HS) for producing a foam part (303) of a seat cushion, comprising a foaming tool (SW) according to Claim 2 or 3 and at least one clip (1, 101, 201, 301) for securing a seat cushion (304) to the foam part (303) of the seat cushion, the clip being secured to the foaming tool by a form fit, wherein the clip (1, 101, 201, 301) comprises at least one securing element (1.2, 101.2, 201.2, 301.2, 1.6) for temporarily securing the clip (1, 101, 201, 301) to the foaming tool (SW) by a form fit.

5. Production arrangement (HS) according to Claim 4, **characterized in that** the at least one securing element (1.2, 101.2, 201.2, 301.2, 1.6) is designed in the form of a latching nose (1.2, 101.2, 201.2, 301.2) or in the form of a spring-hook nose (1.6).

6. Production arrangement (HS) according to Claim 4 or 5,
**characterized in that** the clip (1, 101, 201, 301) comprises at least one accommodating element (1.5, 101.5, S) for securing the seat cover (304).

7. Production arrangement (HS) according to Claim 6, **characterized in that** the at least one accommodating element (1.5, 101.5, S) is designed in the form of a hook (1.5, 101.5) or in the form of a web (S).

8. Production arrangement (HS) according to Claim 6 or 7,
**characterized in that** the at least one securing element (1.2, 101.2, 201.2, 301.2, 1.6) and the at least one accommodating element (1.5, 101.5, S) are directed away from one another.

9. Production arrangement (HS) according to one of Claims 4 to 8,
**characterized in that** the clip (1, 101, 201, 301) comprises a plate-like region (B) for securing the clip (1, 101, 201, 301) in the foam part (303) by a form fit and/or a material bond by virtue of the plate-like region (B) being foamed in place during production of the foam part (303).

10. Method for producing a foam part (303) of a seat cushion, wherein at least one clip (1, 101, 201, 301) for securing a seat cover (304) to the foam part (303) of the seat cushion, said clip comprising at least one securing element (1.2, 101.2, 201.2, 301.2, 1.6) for temporarily securing the clip (1, 101, 201, 301) to the foaming tool (SW) by a form fit, is secured in a foaming tool (SW) according to Claim 2 or 3 by a form fit and then the foam part (303) is produced by a foaming operation in the foaming tool (SW), wherein the at least one clip ( 1, 101, 201, 301) is partially foamed in place.

## Revendications

1. Clip (1, 101, 201, 301) pour fixer un revêtement de siège (304) sur un élément de mousse (303) d'une garniture de siège, comportant au moins un élément de fixation (1.2, 101.2, 201.2, 301.2, 1.6) servant à fixer temporairement par complémentarité de formes le clip (1, 101, 201, 301) sur un moule de moussage (SW),
**caractérisé par** une région (B) en forme de plateau pour la fixation par complémentarité de formes et/ou par liaison de matière du clip (1, 101, 201, 301) dans l'élément de mousse (303) par moussage de la région (B) en forme de plateau pendant la fabrication de l'élément de mousse (303).

2. Moule de moussage (SW) servant à la fabrication d'un élément de mousse (303) d'une garniture de siège, comportant au moins un élément de réception de clip (2, 102, 202, 302) servant à la réception d'un clip (1, 101, 201, 301) pour fixer un revêtement de siège (304) sur l'élément de mousse (303) de la garniture de siège, le clip (1, 101, 201, 301) comportant au moins un élément de fixation (1.2, 101.2, 201.2, 301.2, 1.6) servant à fixer temporairement par complémentarité de formes le clip (1, 101, 201, 301) sur le moule de moussage (SW), l'élément de réception de clip (2, 102, 202, 302) comprenant au moins un élément de retenue (2.1, 102.1, 302.1,2.2, 202.2) correspondant à l'élément de fixation (1.2, 101.2, 201.2, 301.2, 1.6) du clip (1, 101, 201, 301).

3. Moule de moussage (SW) selon la revendication 2, **caractérisé en ce que** l'au moins un élément de retenue (2.1, 102.1, 302.1,2.2, 202.2), correspondant à l'élément de fixation (1.2, 101.2, 201.2, 301.2, 1.6) du clip (1, 101, 201, 301), de l'élément de réception de clip (2, 102, 202, 302) est réalisé sous la forme d'un évidement (2.1, 102.1, 302.1, 2.2, 202.2).

4. Agencement de fabrication (HS) servant à la fabrication d'un élément de mousse (303) d'une garniture de siège, comportant un moule de moussage (SW) selon la revendication 2 ou 3 et au moins un clip (1, 101, 201, 301) fixé à celui-ci par complémentarité de formes pour fixer un revêtement de siège (304) sur l'élément de mousse (303) de la garniture de siège, le clip (1, 101, 201, 301) comportant au moins un élément de fixation (1.2, 101.2, 201.2, 301.2, 1.6) pour la fixation temporaire par complémentarité de formes du clip (1, 101, 201, 301) sur l'outil de moussage (SW).

5. Agencement de fabrication (HS) selon la revendication 4, **caractérisé en ce que** l'au moins un élément de fixation (1.2, 101.2, 201.2, 301.2, 1.6) est réalisé sous la forme d'un ergot d'encliquetage (1.2, 101.2, 201.2, 301.2) ou sous la forme d'un ergot de crochet élastique (1.6).

6. Agencement de fabrication (HS) selon la revendication 4 ou 5,
**caractérisé en ce que** le clip (1, 101, 201, 301) comporte au moins un élément de réception (1.5, 101.5, S) servant à la fixation du revêtement de siège (304).

7. Agencement de fabrication (HS) selon la revendication 6,
**caractérisé en ce que** l'au moins un élément de réception (1.5, 101.5, S) est réalisé sous la forme d'un crochet (1.5, 101.5) ou sous la forme d'une nervure (S).

8. Agencement de fabrication (HS) selon la revendication 6 ou 7, **caractérisé en ce que** l'au moins un élément de fixation (1.2, 101.2, 201.2, 301.2, 1.6) et l'au moins un élément de réception (1.5, 101.5, S) sont opposés l'un à l'autre.

9. Agencement de fabrication (HS) selon l'une des revendications 4 à 8, **caractérisé en ce que** le clip (1, 101, 201, 301) comporte une région (B) en forme de plateau pour la fixation par complémentarité de formes et/ou par liaison de matière du clip (1, 101, 201, 301) dans l'élément de mousse (303) par moussage de la région (B) en forme de plateau pendant la fabrication de l'élément de mousse (303).

10. Procédé de fabrication d'un élément de mousse (303) d'une garniture de siège, au moins un clip (1, 101, 201, 301) pour fixer un revêtement de siège (304) sur l'élément de mousse (303) de la garniture de siège, qui comporte au moins un élément de fixation (1.2, 101.2, 201.2, 301.2, 1.6) servant à fixer temporairement par complémentarité de formes le clip (1, 101, 201, 301) au moule de moussage (SW), étant fixé par complémentarité de formes dans un mode de moussage (SW) selon la revendication 2 ou 3 et ensuite l'élément de mousse (303) étant fabriqué par moussage dans l'outil de moussage (SW), l'au moins un clip (1, 101, 201, 301) étant moussé partiellement.
